# EUROPÄISCHE PATENTSCHRIFT

(11) **EP 1 862 837 B1**
(45) Veröffentlichungstag und Bekanntmachung des Hinweises auf die Patenterteilung: **08.08.2012**
(21) Anmeldenummer: 07008926.3
(22) Anmeldetag: 03.05.2007
(51) Int. Cl.: G02B 17/08, G02B 13/14, F41G 7/22

(54) **Multispektrale Abbildungsoptik**
Multi-spectral optical imaging system
Optique d'imagerie à spectres multiples

(30) Priorität: 31.05.2006 DE 102006025328
(43) Veröffentlichungstag der Anmeldung: 05.12.2007
(73) Patentinhaber: Diehl BGT Defence GmbH & Co.KG, 88662 Überlingen (DE)
(72) Erfinder: Baumgart, Jörg, Dr., 88634 Herdwangen-Schönach (DE)
(74) Vertreter: Diehl Patentabteilung

(56) Entgegenhaltungen:
- WO-A-99/18468
- DE-A1- 19 850 436
- US-A- 5 089 910
- US-B1- 6 198 564

## Beschreibung

Die Erfindung betrifft eine multispektrale Abbildungsoptik zur Abbildung eines Gesichtsfeldes auf einen Detektor, umfassend eine Cassegrain-Optik mit einem konkaven Primärspiegel und einem Sekundärspiegel. Die Erfindung betrifft weiter einen Suchkopf sowie einen Lenkflugkörper.

Zur Abbildung eines Gesichtsfeldes auf einen Detektor werden in einem Suchkopf eines Lenkflugkörpers üblicherweise Abbildungsoptiken verwendet, die nach dem Prinzip einer Cassegrain-Optik oder einer Variante dieses Optikkonzepts aufgebaut sind. Eine Cassegrain-Optik kombiniert eine lange Brennweite mit einer kompakten Bauform, wodurch zwei der wesentlichen Forderungen an eine Abbildungsoptik für einen Suchkopf erfüllt sind. Bei einer Cassegrain-Optik wird einfallendes Licht des beobachteten Gesichtsfeldes von einem konkaven Primärspiegel gegen die Einfallsrichtung auf einen kleineren Sekundärspiegel gerichtet, von diesem in Richtung auf den Primärspiegel reflektiert und somit insgesamt zur Abbildung auf einen vor oder hinter dem Primärspiegel angeordneten Detektor fokussiert. Liegt der Detektor hinter dem Primärspiegel, so weist dieser eine zentrale Öffnung auf, durch welche die Abbildungsstrahlen hindurchtreten können. In der Regel ist der Sekundärspiegel zur Verlängerung der Brennweite konvex ausgeformt.

Den Vorteilen einer Cassegrain-Optik hinsichtlich einer kompakten Bauweise stehen als Nachteile ein gekrümmtes Bildfeld in Folge einer sphärischen Aberration gegenüber. Zur Korrektur einer sphärischen Aberration ist die Einfügung einer Schmidt-Platte in der Eintrittspupille vor dem Primärspiegel bekannt. Auch ist es bekannt, eine Linse zur Bildfeldebnung in der Nähe des Bildortes anzuordnen.

Nachteiligerweise kann eine unter Verwendung von refraktiven Elementen korrigierte Cassegrain-Optik nur in einem relativ schmalen Spektralbereich eingesetzt werden. Die optische Wirkung eines refraktiven Elementes, wie zum Beispiel einer Linse, hängt nämlich in nicht unerheblichem Maße von der Wellenlänge des abzubildenden Lichtes ab, da die Brechzahl des eingesetzten Materials eine diesbezügliche Abhängigkeit zeigt. So fällt beispielsweise die Brechzahl von Saphir von einem Wert von etwa 1,8 bei 400 nm auf einen Wert von etwa 1,75 bei einer Wellenlänge von 2 µm ab.

Aus dem Stand der Technik sind diverse Cassegrain-Teleskope bekannt. Die US 5 089 910 A und die US 5 114 238 A offenbaren zoomfähige Teleskope für den infraroten Spektralbereich. Aus der DE 198 50 436 A1 ist ein Objektiv mit einer Cassegrain-Optik und mit verschiebbaren Linsengruppen bekannt, das in einem Spektralbereich von 450 - 1100 nm betreibbar ist. Die US 6 198 564 B1 und die WO 99/18468 A zeigen den Einsatz von Cassegrain-Optiken in Suchköpfen von Flugkörpem.

Aufgabe der Erfindung ist es, eine multispektrale Abbildungsoptik für einen Suchkopf eines Lenkflugkörpers anzugeben, die bei einer möglichst kompakten Bauweise eine gute Abbildungsqualität in unterschiedlichen Spektralbereichen aufweist. Weiter ist es Aufgabe der Erfindung, einen multispektralen Suchkopf mit hoher Abbildungsqualität für einen Lenkflugkörper sowie einen Lenkflugkörper mit der Möglichkeit der Erfassung eines Gesichtsfeldes in mehreren Spektralbereichen anzugeben.

Diese Aufgabe wird erfindungsgemäß gelöst durch eine multispektrale Abbildungsoptik für einen Suchkopf eines Lenkflugkörpers zur Abbildung eines Gesichtsfeldes auf einen Detektor, umfassend eine Cassegrain-Optik mit einem konkaven Primärspiegel und einem Sekundärspiegel, wobei zur Bildfeldebnung dem Sekundärspiegel in Abbildungsrichtung ein Linsenpaar aus einer negativen und einer positiven Linse nachgeordnet ist, wobei
a) beide Linsen jeweils aus demselben Material bestehen, welches zumindest in zwei Spektralbereichen eine hohe optische Transmission aufweist, ausgewählt aus der Gruppe: ultravioletter Spektralbereich, sichtbarer Spektralbereich, nahes Infrarot, mittleres Infrarot und fernes Infrarot, und
b) die Brechkräfte der beiden Linsen dieselbe Größenordnung von etwa + 20m⁻¹ bzw. - 20 m⁻¹ besitzen, so dass sich die Brechkraft des Linsenpaars unabhängig von der Wellenlänge des abzubildenden Lichts zu einem Wert von kleiner gleich 0,2 m⁻¹ addiert.

Die Erfindung geht dabei in einem ersten Schritt von der Überlegung aus, dass sich ein Linsenpaar aus einer negativen und einer positiven Linse an sich zu einer Bildfeldebnung und damit zu einer Korrektur der Cassegrain-Optik eignet.

Weiter geht die Erfindung in einem zweiten Schritt von der Überlegung aus, dass die Abhängigkeit der Brechzahl von der Wellenlänge in beiden Linsen bei Verwendung desselben Materials die gleiche Auswirkung zeigt. Dieser Effekt wird jedoch weitgehend kompensiert, wenn es sich bei dem Linsenpaar um eine negative und eine positive Linse handelt, deren Brechkräfte dieselbe Größenordnung besitzen. In diesem Fall addiert sich nämlich die Brennweite unabhängig von der Wellenlänge des abzubildenden Lichtes im Wesentlichen zu Null. Somit zeigt die Brennweite der Abbildungsoptik insgesamt eine vernachtässigbare Abhängigkeit von der Wellenlänge des abzubildenden Lichtes.

Die angegebene Abbildungsoptik liefert somit bei einer kompakten Bauweise eine hohe Abbildungsqualität in einem breiten spektralen Bereich. Hierzu muss lediglich das für die Linsen verwendete Material eine hohe Transmission in den zur Beobachtung gewünschten Wellenlängenbereichen aufweisen. Dabei wird generell zwischen dem ultravioletten Spektralbereich, dem sichtbaren Spektralbereich, dem nahen Infrarot, dem mittleren Infrarot und dem fernen Infrarot unterschieden. Der ultraviolette Spektralbereich umfasst einen Wellenlängenbereich von etwa 10 bis 380 nm, der sich an den ultravioletten Spektralbereich anschließende sichtbare Spektralbereich umfasst Wellenlängen zwischen etwa 380 bis 800 nm. Nahes, mittleres und fernes Infrarot umfassen die Wellenlängenbereiche von etwa 900 bis 1500 nm, 3.000 bis 5.000 nm bzw. 8.000 bis 12.000 nm.

Die resultierende Brechkraft beider Linsen zeigt keine Änderung unabhängig davon, ob die Linsen von ultraviolettem, von sichtbarem oder vom infraroten Licht durchstrahlt werden. Allenfalls verbleibt eine kleine Änderung der Schnittweite und damit des Bildortes, wobei diese Effekte durch eine Optimierung der Dicken der eingesetzten Linsen verringert oder durch eine entsprechende Justage des Detektors beseitigt werden können.

Bei einem Einsatz der Abbildungsoptik ohne weitere refraktive Elemente im Strahlengang ist es vorteilhaft, wenn die Brechkräfte der beiden Linsen des Linsenpaares im Wesentlichen identisch sind. Hierdurch wird die Abhängigkeit der Brennweite der gesamten Abbildungsoptik von der Wellenlänge des beobachteten Lichtes minimiert.

Bei einem Einsatz der Abbildungsoptik in einem Suchkopf eines Lenkflugkörpers befindet sich diese jedoch hinter einem strahlungsdurchlässigen Fenster, welches zur Abschirmung gegenüber der Außenwelt dient. Ein ebenes Fenster erlaubt dabei nur einen sehr kleinen Schwenkbereich der Abbildungsoptik und wirkt insbesondere bei Flugkörpern störend auf die aerodynamischen Eigenschaften. Aus diesem Grund wird für die Integration einer Abbildungsoptik in einem Suchkopf als Fenster ein Dom bevorzugt, der im weitesten Sinne kuppelförmig ausgestaltet ist. Insbesondere handelt es sich dabei - optisch gesehen - um eine Konvex-Konkav-Linse, bei der die Krümmungsmittelpunkte der beiden Radien in einem Punkt zusammenfallen.

Eine solche den Dom repräsentierende Linse hat für eine nachfolgende, drehbar gelagerte Abbildungsoptik unabhängig von ihrer jeweiligen Position die gleichen optischen Eigenschaften, wenn die Abbildungsoptik um den gemeinsamen Krümmungsmittelpunkt der beiden Seiten drehbar angeordnet ist. Somit kann eine schwenkbare Abbildungsoptik hinter einem starren Dom realisiert werden.

Ein Dom hat jedoch als ein refraktives Element den Nachteil, dass seine optische Wirkung in unterschiedlichen Spektralbereichen eine andere ist. Diese Abhängigkeit der optischen Wirkung von der Wellenlänge des beobachteten Lichts würde die Abbildungsqualität der multispektralen Abbildungsoptik verschlechtern. Dieses Problem lässt sich jedoch kompensieren, wenn sich die Brechkräfte der beiden Linsen des Linsenpaares mit der Brechkraft eines Vorsatzfensters, insbesondere eines Domes, im Wesentlichen zu Null addieren. Dabei ist bevorzugt sowohl für das Vorsatzfenster, insbesondere den Dom, als auch für die Linsen des Linsenpaares dasselbe Material verwendet.

Besitzen die Brechkräfte der beiden Linsen dieselbe Größenordnung von etwa + bzw. - 20 m⁻¹ und addiert sich die Brechkraft des Linsenpaars unabhängig von der Wellenlänge des abzubildenden Lichts von kleiner gleich 0,2 m⁻¹ kann beispielsweise der Einfluss eines vor der Abbildungsoptik befindlichen Domes kompensiert werden.

In einer vorteilhaften Ausgestaltung der Abbildungsoptik ist als Material der Linsen ein Saphir, ein Calziumfluorid, ein Zinksulfid, ein Quarz oder ein Silizium eingesetzt. Unter einem Saphir wird dabei die kristalline Korund-Struktur des Aluminiumoxids (α-Al₂O₃) verstanden.

Saphir und Calziumfluorid zeigen eine hohe optische Transmission sowohl im ultravioletten als auch im sichtbaren Spektralbereich und im Infrarotbereich. Wird Zinksulfid oder Quarz eingesetzt, so kann die Beobachtung des Gesichtsfeldes sowohl im sichtbaren als auch im infraroten Bereich erfolgen. Beim Einsatz von Silizium ist es möglich, das Gesichtsfeld sowohl im nahen als auch im mittleren Infrarot zu erfassen.

Die multispektrale Abbildungsoptik kann beispielsweise dort eingesetzt werden, wo sowohl ein Bild im sichtbaren als auch ein Bild im infraroten oder ultravioletten Spektralbereich gewünscht wird. Die Abbildungsmodi in den unterschiedlichen Spektralbereichen können einander insofern ergänzen, als dass ein Bild im sichtbaren Spektralbereich dem gewohnten Seheindruck entspricht und somit sehr gut durch einen menschlichen Beobachter ausgewertet werden kann. Ein Bild im infraroten Spektralbereich kann hingegen unabhängig von Umgebungslicht, das heißt insbesondere auch bei Nacht oder bei Nebel, aufgenommen und ausgewertet werden. Weiterhin ergeben heiße Objekte wie beispielsweise Triebwerke oder Motoren im Infraroten einen besonders guten Kontrast. Der ultraviolette Spektralbereich ist vor allem dann interessant, wenn zu identifizierende Objekte eine besondere Abstrahlcharakteristik in diesem Spektralbereich haben. Dies ist beispielsweise bei Raketen oder Flugzeugtriebwerken der Fall.

Zweckmäßigerweise weißt der Primärspiegel eine zentrale Öffnung auf, durch welche der Sekundärspiegel das Gesichtsfeld auf den Detektor abbildet, wobei das Linsenpaar in Abbildungsrichtung vor der Öffnung des Primärspiegels angeordnet ist. Mit dieser Variante wird bei einer sehr kompakten Bauform eine lange Brennweite erzielt. Durch die Einfügung des Linsenpaares zwischen Primärspiegel und Sekundärspiegel wird kein zusätzlicher Bauraum der Abbildungsoptik insgesamt benötigt.

Die Abbildungsoptik kann in einer weiteren vorteilhaften Ausgestaltung auch mehrstufig ausgebildet sein. Dabei kann mittels der Cassegrain-Optik in einer Zwischenbildebene ein Bild des Gesichtsfeldes erzeugt werden, welches mit einem nachgeschalteten Objektiv auf den Detektor abgebildet wird. Unter einem Objektiv wird hierbei allgemein eine Kombination von optischen Elementen, wie insbesondere Linsen, verstanden, mit dessen Hilfe ein reelles Bild erzeugt wird.

Eine mehrstufige Optik bietet weiter den Vorteil, dass eine Strahlteilungsoptik zur Aufteilung der Spektralbereiche auf verschiedene Detektoren eingebracht werden kann. Hierdurch ist es möglich, unterschiedliche an verschiedene Spektralbereiche angepasste Detektoren einzusetzen. Für die Strahlteilungsoptik können hierbei spektralwirkende Strahlteiler eingesetzt sein. Bei Anwendung einer Strahlteilungsoptik ist es möglich, beispielsweise den sichtbaren Kanal mit einem anderen Gesichtsfeld oder einer anderen Lichtstärke zu betreiben als den infraroten.

Die multispektrale Abbildungsoptik mit nachgeschalteter Aufteilung der Spektralbereiche bietet insbesondere den Vorteil, dass die zur Beobachtung verschiedener Gesichtsfelder erforderliche Schwenkmechanik als auch die Struktur eines Vorsatzfensters oder eines Domes nur einmal realisiert werden muss. Hierdurch wird ein deutlicher Kostenvorteil erzielt. Insbesondere ist bei einem Einsatz in einem Flugkörper ein verringerter Eingriff in die Außenkontur erforderlich.

Die zweitgenannte Aufgabe wird erfindungsgemäß durch einen Suchkopf eines Lenkflugkörpers mit wenigstens einem Detektor und mit einer vorgenannten Abbildungsoptik zur Abbildung eines erfassten Gesichtsfeldes auf den Detektor gelöst. Ein derartiger Suchkopf weist die vorbeschriebenen Vorteile gegenüber dem Stand der Technik auf.

Die hinsichtlich eines Lenkflugkörpers gestellte Aufgabe wird erfindungsgemäß durch einen Lenkflugkörper mit einem Suchkopf der vorbeschriebenen Ausrüstung gelöst.

Ausführungsbeispiele der Erfindung werden anhand einer Zeichnung näher erläutert. Dabei zeigen:
- Fig. 1: schematisch eine multispektrale Abbildungsoptik unter Verwendung eines Linsenpaares und
- Fig. 2: schematisch einen Lenkflugkörper mit einem Suchkopf.

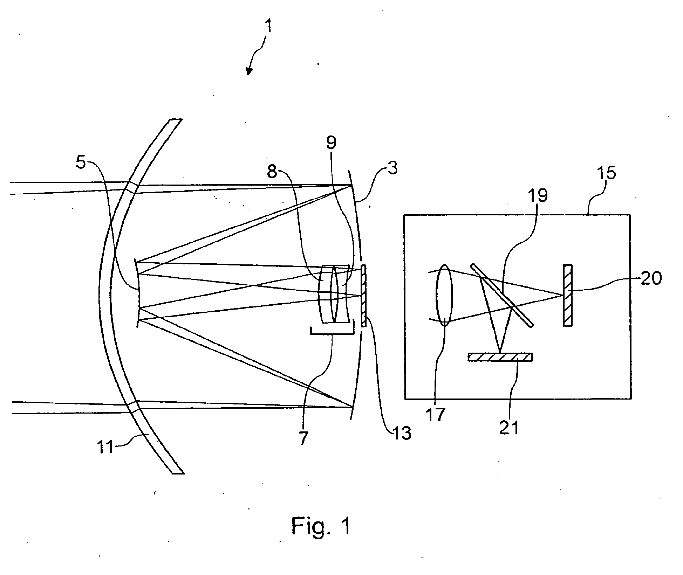

In Fig. 1 ist eine multispektrale Abbildungsoptik 1 dargestellt, wie sie in einem Suchkopf eines Lenkflugkörpers Verwendung findet. Die Abbildungsoptik 1 umfasst eine Cassegrain-Optik, die aus einem konkaven Primärspiegel 3 und einem konvexen Sekundärspiegel 5 besteht. Wie eingezeichnet, fällt Licht aus dem beobachteten Gesichtsfeld zunächst auf den Primärspiegel 3, wird gegen die Einfallsrichtung auf den konvexen Sekundärspiegel 5 reflektiert und anschließend wiederum in Richtung auf den Primärspiegel 3 abgelenkt. Hierbei verlängert der konvexe Sekundärspiegel 5 die Brennweite der Abbildungsoptik 1.

In Abbildungsrichtung hinter dem Sekundärspiegel 5 ist ein Linsenpaar 7 aus einer positiven Linse 8 und einer benachbarten negativen Linse 9 angeordnet. Beide Linsen 8 bzw. 9 sind aus Saphir gefertigt, so dass das Linsenpaar 7 insgesamt eine hohe optische Transmission vom ultravioletten bis zum infraroten Spektralbereich aufweist. Die beiden Linsen 8 bzw. 9 haben eine Brechkraft von etwa + bzw. - 20 m⁻¹.

Die Abbildungsoptik 1 ist im Suchkopf eines Lenkflugkörpers hinter einem kuppelförmigen Dom 11 aus Saphir angeordnet. Der Dom 11 wirkt hierbei als eine Konvex-Konkav-Linse, so dass sich dessen optische Eigenschaften in Abhängigkeit vom Wellenlängenbereich des beobachteten Lichtes ändern. Die Brennweite des Domes 11 beträgt etwa - 5.000 mm bzw. weist der Dom 11 eine Brechkraft von - 0,2 m⁻¹ auf. Die Linsen 8 und 9 sind nun so gegeneinander leicht verstimmt, dass die Brechkraft des Linsenpaares 7 sich auf + 0,2 m⁻¹ addiert. Somit addieren sich die Brechkräfte des Domes 11 und des Linsenpaares 7 insgesamt auf Null. Hierdurch wird sichergestellt, dass die Brennweite der Abbildungsoptik 1 unter Einbeziehung des vorgesetzten Domes 11 unabhängig von dem beobachteten Spektralbereich ist.

Das beobachtete Gesichtsfeld wird durch die dargestellte Abbildungsoptik 1 auf einen Detektor 13 fokussiert, der in einer zentralen Öffnung des Primärspiegels 3 angeordnet ist.

In dem Kasten 15 ist die Ausgestaltung der Abbildungsoptik 1 als eine mehrstufige Optik dargestellt. In diesem Fall entfällt der Detektor 13, so dass die Abbildung des Gesichtsfeldes mittels eines Objektives 17, welches der Einfachheit halber lediglich als Linse dargestellt ist, und einer Strahlteiloptik 19 sowohl auf einen Detektor 20 als auch auf einen Detektor 21 fällt. Der Detektor 20 ist dabei für den sichtbaren Spektralbereich ausgelegt, während der Detektor 21 für den infraroten Spektralbereich ausgestaltet ist.

Die nachgeschaltete, in dem Kasten 15 dargestellte Optik erlaubt es somit, eine Auswertung des Gesichtsfeldes sowohl im sichtbaren Spektralbereich als auch im infraroten Spektralbereich vorzunehmen. An der multispektralen Abbildungsoptik 1 braucht hierzu keinerlei Veränderung vorgenommen zu werden.

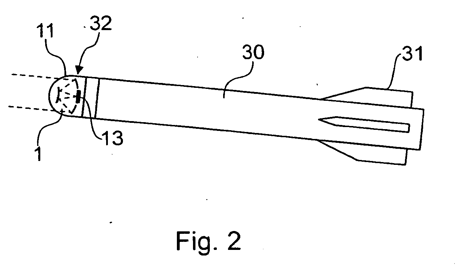

In Fig. 2 ist schematisch ein Flugkörper 30 dargestellt, der eine Antriebseinheit 31 und einen Suchkopf 32 aufweist. Zur Zielorientierung ist in dem Suchkopf 32 eine Abbildungsoptik 1 gemäß Fig. 1 hinter einem kuppelförmigen Dom 11 angeordnet. Das beobachtete Gesichtsfeld wird mittels der Abbildungsoptik 1 auf einen Detektor 13 abgebildet. Die Abbildungsoptik 1 insgesamt ist auf einem kardanisch gelagerten Schwenkmechanismus angeordnet. Dies erlaubt dem Lenkflugkörper 30 während seines Fluges die Beobachtung der Umgebung mit Rundumsicht.

### Bezugszeichenliste

- 1: Abbildungsoptik
- 3: Primärspiegel
- 5: Sekundärspiegel
- 7: Linsenpaar
- 8: positive Linse
- 9: negative Linse
- 11: Dom
- 13: Detektor
- 15: Kasten
- 17: Objektiv
- 19: Strahlteiloptik
- 20: Detektor
- 21: Detektor
- 30: Flugkörper
- 31: Antriebseinheit
- 32: Suchkopf

## Patentansprüche

1. Multispektrale Abbildungsoptik (1) für einen Suchkopf (32) eines Lenkflugkörpers (30) zur Abbildung eines Gesichtsfeldes auf einen Detektor (13, 20, 21), umfassend eine Cassegrain-Optik mit einem konkaven Primärspiegel (3) und einem Sekundärspiegel (5), wobei zur Bildfeldebnung dem Sekundärspiegel (5) in Abbildungsrichtung ein Linsenpaar (7) aus einer negativen und einer positiven Linse (8, 9) nachgeordnet ist, wobei
a) beide Linsen (8, 9) aus demselben Material bestehen, welches zumindest in zwei Spektralbereichen eine hohe optische Transmission aufweist, ausgewählt aus der Gruppe: ultravioletter Spektralbereich, sichtbarer Spektralbereich, nahes Infrarot, mittleres Infrarot und fernes Infrarot, und
b) die Brechkräfte der beiden Linsen (8, 9) dieselbe Größenordnung von etwa + 20 m⁻¹ bzw. - 20 m⁻¹ besitzen, so dass sich die Brechkraft des Linsenpaars (7) unabhängig von der Wellenlänge des abzubildenden Lichts zu einem Wert von kleiner gleich 0,2 m⁻¹ addiert.

2. Abbildungsoptik (1) nach Anspruch 1,
wobei das Material der Linsen (8,9) ein Saphir, ein Calziumfluorid, ein Zinksulfid, ein Quarz oder ein Silizium ist.

3. Abbildungsoptik (1) nach Anspruch 1 oder 2,
wobei der Primärspiegel (3) eine zentrale Öffnung aufweist, durch welche der Sekundärspiegel (5) das Gesichtsfeld auf den Detektor (13, 20, 21) abbildet, und dass das Linsenpaar (7) in Abbildungsrichtung vor der Öffnung des Primärspiegels (3) angeordnet ist.

4. Abbildungsoptik (1) nach einem der vorherigen Ansprüche,
wobei dem Linsenpaar (7) in Abbildungsrichtung mindestens ein Objektiv (17) nachgeschaltet ist.

5. Abbildungsoptik (1) nach einem der vorherigen Ansprüche,
wobei dem Linsenpaar (7) in Abbildungsrichtung eine Strahlteilungsoptik (19) zur Aufteilung der Spektralbereiche auf verschiedene Detektoren (13, 20, 21) nachgeschaltet ist.

6. Suchkopf (32) eines Lenkflugkörpers (30) mit wenigstens einem Detektor (13) und mit einer Abbildungsoptik (1) nach einem der vorherigen Ansprüche zur Abbildung eines erfassten Gesichtsfeldes auf den Detektor (13, 20, 21).

7. Lenkflugkörper (30) mit einem Suchkopf (32) gemäß Anspruch 6.

## Claims

1. Multispectral optical imaging system (1) for a seeker head (32) for a guided missile (30) for forming an image of a field of view on a detector (13, 20, 21), comprising a Cassegrain optical system with a concave primary mirror (3) and a secondary mirror (5), wherein for image field flattening a lens pair (7) consisting of a negative lens and a positive lens (8, 9) is arranged after the secondary mirror (5) in the imaging direction, wherein
a) both lenses (8, 9) consist of the same material, which has a high optical transmissivity in at least two spectral regions, selected from the group: ultraviolet spectral region, visible spectral region, near infrared, mid infrared and far infrared, and
b) the refractive powers of the two lenses (8, 9) are of the same order of magnitude of approximately 20 m⁻¹ or -20 m⁻¹, so that the refractive power of the lens pair (7) is summed to a value of less than or equal to 0.2 m⁻¹ independently of the wavelength of the light to be imaged.

2. Optical imaging system (1) according to Claim 1,
wherein the material of the lenses (8, 9) is a sapphire, a calcium fluoride, a zinc sulphide, a quartz or a silicon.

3. Optical imaging system (1) according to Claim 1 or 2,
wherein the primary mirror (3) has a central opening, through which the secondary mirror (5) forms an image of the field of view on the detector (13, 20, 21), and the lens pair (7) is arranged before the opening of the primary mirror (3) in the imaging direction.

4. Optical imaging system (1) according to any one of the preceding claims,
wherein the lens pair (7) is arranged after at least one objective (17) in the imaging direction.

5. Optical imaging system (1) according to any one of the preceding claims,
wherein the lens pair (7) is arranged in the imaging direction after a beam dividing optical system (19) for distributing the spectral region among various detectors (13, 20, 21).

6. Seeker head (32) of a guided missile (30) having at least one detector (13) and an imaging optical system (1) according to any one of the preceding claims for forming an image of a detected field of view on the detector (13, 20, 21).

7. Guided missile (30) having a seeker head (32) according to Claim 6.

## Revendications

1. Optique de représentation (1) multispectrale pour une tête chercheuse (32) d'un missile téléguidé (30) destinée à représenter un champ de vision sur un détecteur (13, 20, 21), comprenant une optique de Cassegrain avec un miroir primaire concave (3) et un miroir secondaire (5), une paire de lentilles (7) composée d'une lentille positive et d'une lentille négative (8, 9) étant disposée à la suite du miroir secondaire (5) dans le sens de la représentation pour aplanir le champ d'image,
a) les deux lentilles (8, 9) étant composées du même matériau, lequel présente une transmission optique élevée au moins dans deux plages spectrales choisies dans le groupe suivant : plage spectrale des ultraviolets, plage spectrale visible, proches infrarouges, infrarouges moyens et infrarouges lointains, et
b) les réfringences des deux lentilles (8, 9) possédant le même ordre de grandeur d'environ +20 m⁻¹ ou -20 m⁻¹, de sorte que la réfringence de la paire de lentilles (7) s'additionne indépendamment de la longueur d'onde de la lumière à représenter pour former une valeur inférieure ou égale à 0,2 m⁻¹.

2. Optique de représentation (1) selon la revendication 1, le matériau des lentilles (8, 9) étant un saphir, un fluorure de calcium, un sulfure de zinc, un quartz ou un silicium.

3. Optique de représentation (1) selon la revendication 1 ou 2, le miroir primaire (3) présentant une ouverture centrale à travers laquelle le miroir secondaire (5) représente le champ de vision sur le détecteur (13, 20, 21) et la paire de lentilles (7) étant disposée avant l'ouverture du miroir primaire (3) dans le sens de la représentation.

4. Optique de représentation (1) selon l'une des revendications précédentes, au moins un objectif (17) étant monté après la paire de lentilles (7) dans le sens de la représentation.

5. Optique de représentation (1) selon l'une des revendications précédentes, une optique de séparation des rayons (19) étant disposée après la paire de lentilles (7) dans le sens de la représentation pour répartir les plages spectrales sur différents détecteurs (13, 20, 21).

6. Tête chercheuse (32) d'un missile téléguidé (30) comprenant au moins un détecteur (13) et comprenant une optique de représentation (1) selon l'une des revendications précédentes pour représenter un champ de vision balayé sur le détecteur (13, 20, 21).

7. Missile téléguidé (30) équipé d'une tête chercheuse (32) selon la revendication 6.
